# EUROPÄISCHE PATENTANMELDUNG

(11) **EP 2 145 714 A2**
(43) Veröffentlichungstag der Anmeldung: **20.01.2010**
(21) Anmeldenummer: 09160333.2
(22) Anmeldetag: 15.05.2009
(51) Int. Cl.: B23H 3/00, B23H 3/02, B23H 3/08, B23H 9/00

(54) **Vorrichtung und Verfahren zur elektrochemischen Bearbeitung von Werkstücken**

(30) Priorität: 15.07.2008 DE 102008040399
(71) Anmelder: ROBERT BOSCH GMBH, 70442 Stuttgart (DE)
(72) Erfinder: Ronkel, Frank, 47803, Krefeld (DE); Hammer, Christoph, 71672, Marbach (DE); Baehring, Dietrich, 70190, Stuttgart-Ost (DE); Dietz, Volker, 73431, Aalen (DE); Gebers, Joerg, 71282, Hemmingen (DE); Schober, Markus, 04668, Grimma (DE)

(57) **Zusammenfassung**

Die Erfindung betrifft eine Vorrichtung zur elektrochemischen Bearbeitung von Werkstücken (2), umfassend eine Aufnahmeeinrichtung (10, 11), um das zu bearbeitende Werkstück (2) zu halten, eine Elektrode, um das Werkstück (2) zu bearbeiten, eine Elektrolytversorgungsvorrichtung, um eine Versorgung mit einer Elektrolytlösung (4) sicherzustellen, eine Regelungseinheit (15) zur Regelung der elektrochemischen Bearbeitung und eine Durchflussmessvorrichtung (13, 16), welche mit der Regelungseinheit (15) verbunden ist und welche kontinuierlich eine Durchflussmenge der Elektrolytlösung erfasst, wobei die Regelungseinheit basierend auf den Werten der erfassten Durchflussmenge eine Prozessregelung ausführt. Ferner betrifft die Erfindung ein Verfahren zur elektrochemischen Bearbeitung.

## Beschreibung

### Stand der Technik

Die vorliegende Erfindung betrifft eine Vorrichtung und ein Verfahren zur elektrochemischen Bearbeitung von Werkstücken, insbesondere zur Bearbeitung von Bauteilen für Kraftstoffeinspritzsysteme.

In jüngster Zeit hat die elektrochemische Bearbeitung von Werkstücken eine breitere Verwendung auch im Großserieneinsatz gefunden. Mit dem auch als ECM-Verfahren bezeichneten Verfahren werden beispielsweise bei der Herstellung von Kraftstoffeinspritzkomponenten für Benzin- oder Diesel-Motoren insbesondere Bohrungsverschneidungen entgratet, Druckkammern in die Bauteile eingebracht und besondere Verschneidungsgeometrien und Auslaufgeometrien der Bauteile erzeugt. Ein wesentlicher Nachteil des ECM-Verfahrens ist dabei, dass während des Prozesses keine Information über die erzeugte Geometrie zurückgemeldet werden. Zwar kann eine Erzeugung eines Durchbruches in einem Bauteil erfasst werden, jedoch kann eine Entstehung einer Kontur nach dem Durchbruch nicht erfasst werden. Da die für die Einspritzung jedoch verwendeten Bauteile jeweils nur kleine Geometrien aufweisen, sind hierbei Abweichungen von den vorgegebenen Maßen nicht akzeptabel. Daher ergibt sich bei der Herstellung derartiger Bauteile ein relativ hoher Anteil Ausschussbauteilen.

### Vorteile der Erfindung

Die erfindungsgemäße Vorrichtung zur elektrochemischen Bearbeitung von Werkstoffen mit den Merkmalen des Patentanspruches 1 weist demgegenüber den Vorteil auf, dass sie kontinuierlich eine Messung eines Durchflusses eines Elektrolyten erfasst, wodurch eine genaue Überwachung der gefertigten Kontur im Werkstück möglich ist. Erfindungsgemäß kann somit durch eine kontinuierliche Überwachung des Durchflusses eine genaue Prozessregelung ermöglicht werden. So wird es erfindungsgemäß möglich, eine Regelung des Prozesses nach der Zielgröße der Geometrie des Werkstücks auszuführen. Hierdurch werden weniger Ausschussbauteile bei der Fertigung erhalten und ferner kann eine signifikante Steigerung einer Genauigkeit der hergestellten Geometrien der Werkstücke erreicht werden. Ferner ist es möglich, den Bearbeitungsprozess sofort nach einem Erreichen einer Zielgeometrie abzuschalten, so dass nicht unnötigerweise eine Bearbeitung fortgeführt wird. Hierdurch kann insbesondere auch Reduzierung der Herstellzeit der Werkstücke erreicht werden. Dies wird erfindungsgemäß dadurch erreicht, dass die Vorrichtung wenigstens eine Durchflussmessvorrichtung aufweist, welche mit einer Regeleinheit zur Regelung der elektrochemischen Bearbeitung verbunden ist. Die Durchflussmessvorrichtung erfasst kontinuierlich eine Durchflussmenge einer Elektrolytlösung. Da die Durchflussmenge von der im Werkstück erzeugten Geometrie abhängt, kann die Durchflussmenge beispielsweise als Maß für ein Fertigstellen eines Werkstücks herangezogen werden. Beispielsweise ist eine Durchflussmenge durch ein Werkstück, an welchem nach der Herstellung noch ein Grat vorhanden ist, geringer als nach einer elektrochemischen Bearbeitung, mit welcher der Grat entfernt wurde. Somit kann durch die Änderung der Durchflussmenge oder auch einen Vergleich der erfassten Werte für die Durchflussmenge mit vorgegebenen Werten festgestellt werden, wann eine Entgratung vollständig vorliegt und eine Zielgeometrie des Werkstücks erreicht ist.

Die Unteransprüche zeigen bevorzugte Weiterbildungen der Erfindung.

Vorzugsweise ist die Regeleinheit derart ausgelegt, dass bei einer Änderung der Durchflussmenge über einen vorgegebenen Schwellenwert eine Bearbeitung des Werkstücks beendet wird. Somit kann die erfindungsgemäße kontinuierliche Durchflussmessung insbesondere zur Beendigung des Prozesses verwendet werden.

Weiter bevorzugt umfasst die Durchflussmessvorrichtung einen Durchflussmesser, welcher in einem ersten Leitungsabschnitt einer Elektrolytversorgungsvorrichtung in Strömungsrichtung vor dem Werkstück angeordnet ist. Alternativ oder zusätzlich kann die Durchflussmessvorrichtung ferner einen Durchflussmesser umfassen, welcher in einem Leitungsabschnitt in Strömungsrichtung nach dem Werkstück angeordnet ist. Bei Verwendung mehrerer Durchflussmesser kann insbesondere eine redundante Messung durchgeführt werden. Hierdurch kann beispielsweise ein Mittelwert von mehreren erfassten Durchflusswerten zur Prozessregelung verwendet werden.

Weiter bevorzugt umfasst die Vorrichtung zur elektrochemischen Bearbeitung ferner eine Druckerfassungsvorrichtung, welche einen Druck der Elektrolytlösung nahe am Werkstück erfasst. Die Druckerfassungsvorrichtung ist dabei vorgesehen, um sicherzustellen, dass ein möglichst konstanter Druck während des Prozesses vorliegt. Ferner kann mittels der Druckerfassungsvorrichtung auch eine Druckänderung detektiert werden, woraus zusätzliche Information hinsichtlich einer Geometrie eines gerade bearbeiteten Werkstücks erhalten werden kann. Dadurch kann eine noch bessere Genauigkeit der Prozessregelung erreicht werden.

Weiter bevorzugt umfasst die Druckerfassungsvorrichtung einen Druck der Elektrolytlösung an wenigstens zwei verschiedenen Positionen in der Elektrolytversorgungsvorrichtung. Vorzugsweise wird dabei ein erster Druck an einem ersten Leitungsabschnitt nahe dem Werkstück in Strömungsrichtung vor dem Werkstück und an einem zweiten Leitungsabschnitt in Strömungsrichtung nach dem Werkstück erfasst. Die Regeleinheit führt dann eine Prozessregelung auch unter Berücksichtigung der beiden erfassten Druckwerte aus. Hierbei kann einerseits eine Differenz der absoluten Druckwerte des ersten und zweiten Drucks zur Prozessregelung verwendet werden und/oder auch eine Prozessregelung, basierend auf einer Änderung eines Differenzdrucks zwischen dem ersten und zweiten Druck ausgeführt werden.

Weiter bevorzugt ist in der Elektrolytversorgungsvorrichtung ein Dämpfungselement und/oder ein Druckregelventil und/oder ein Druckpuffer vorgesehen. Hierdurch kann ein Druck der Elektrolytlösung für eine Bearbeitung des Werkstücks möglichst konstant gehalten werden. Dadurch werden für die kontinuierliche Durchflussmessung bzw. die kontinuierliche Druckerfassung exakte Werte erhalten, so dass eine verbesserte Druckregelung möglich ist.

Besonders bevorzugt ist die Elektrode während einer Bearbeitung des Werkstücks ortsfest angeordnet. Hierdurch können insbesondere Entgratvorgänge am Werkstück, insbesondere bei sich treffenden Bohrungen innerhalb des Werkstücks, mit hoher Genauigkeit ausgeführt werden.

Das erfindungsgemäße Verfahren zur elektrochemischen Bearbeitung von Werkstücken erfasst während einer Bearbeitung eines Werkstücks kontinuierlich eine Durchflussmenge der Elektrolytlösung. Diese kontinuierlich erfassten Werte werden dann für eine Prozessregelung, insbesondere für eine Bestimmung eines Endes des Prozesses, verwendet. Hierbei ist das erfindungsgemäße Verfahren insbesondere bei der elektrochemischen Bearbeitung von hochpräzisen Bauteilen, wie z.B. Bauteilen für eine Kraftstoffeinspritzung, verwendbar. Vorzugsweise verwendet das erfindungsgemäße Verfahren zur Prozessregelung absolute Werte für die Durchflussmenge. Alternativ oder zusätzlich können zur Prozessregelung ferner auch Änderungen von Differenzen zwischen einem ersten Wert und einem nachfolgenden zweiten Wert verwendet werden.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung einer Vorrichtung zur elektrochemischen Bearbeitung von Werkstücken gemäß einem ersten Ausführungsbeispiel der Erfindung,
- Figur 2: eine schematische Darstellung einer Vorrichtung zur elektrochemischen Bearbeitung von Werkstücken gemäß einem zweiten Ausführungsbeispiel der Erfindung, und
- Figur 3: eine schematische Darstellung einer Vorrichtung zur elektrochemischen Bearbeitung von Werkstücken gemäß einem dritten Ausführungsbeispiel der Erfindung.

### Bevorzugte Ausführungsformen der Erfindung

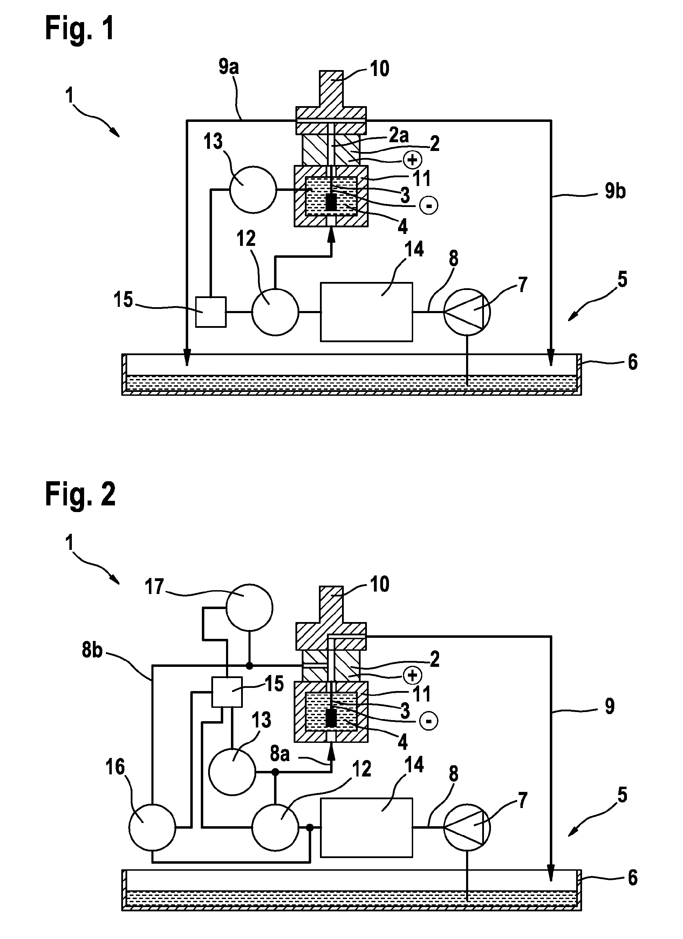

Nachfolgend wird unter Bezugnahme auf Figur 1 eine Vorrichtung 1 zur elektrochemischen Bearbeitung von Werkstücken 2 im Detail beschrieben.

Wie aus Figur 1 ersichtlich ist, umfasst die Vorrichtung 1 eine zweiteilige Aufnahmeeinrichtung mit einem ersten Teil 10 und einem zweiten Teil 11, welche ein Werkstück 2 mit Bohrung 2a zwischen sich fest einspannen. Ferner umfasst die Vorrichtung 1 eine Elektrode 3, welche im zweiten Teil 11 der Aufnahmerichtung angeordnet ist. Während der Bearbeitung ist die Elektrode 3 dabei ortsfest fixiert. Das Bezugszeichen 5 bezeichnet eine Elektrolytversorgungsvorrichtung, welche eine Elektrolytlösung von einem Tank 6 zum Werkstück 2 und zurück führt. Die Elektrolytversorgungsvorrichtung 5 umfasst ferner eine Pumpe 7, welche in einem ersten Leitungsabschnitt 8 angeordnet ist. Der erste Leitungsabschnitt 8 reicht vom Tank 6 bis zur Aufnahmeeinrichtung. Weiter sind zwei zweite Leitungsabschnitte 9a, 9b vorgesehen, welche ausgehend vom ersten Teil 10 der Aufnahmeeinrichtung die Elektrolytlösung 4 wieder zurück zum Tank 6 strömen lassen. Zur Förderung der Elektrolytlösung aus dem Tank 6 ist die Pumpe 7 vorgesehen, wobei am ersten Leitungsabschnitt 8 ferner noch ein Puffer in Form eines Speichers 14 angeordnet ist. Dieser Speicher 14 dient insbesondere dazu, einen möglichst konstanten Druck bei der Bearbeitung des Werkstücks 2 aufrecht zu erhalten.

Ferner umfasst die Vorrichtung 1 einen Durchflussmesser 12, welche ebenfalls im ersten Leitungsabschnitt 8 angeordnet ist. Der Durchflussmesser 12 ist somit in Strömungsrichtung des Elektrolyten 4 vor dem Werkstück 2 angeordnet. Weiter ist der Durchflussmesser 12 in Strömungsrichtung nach dem Speicher 14 angeordnet.

An der Aufnahmeeinrichtung ist ferner noch eine Druckerfassungsvorrichtung 13 angeordnet. Die Druckerfassungsvorrichtung erfasst dabei einen Druck insbesondere nahe der Elektrode 3. Die Elektrode 3 ist in diesem Ausführungsbeispiel als Kathode geschaltet und das Werkstück 2 als Anode.

Der Durchflussmesser 12 und die Druckmesseinrichtung 13 sind mit einer Regelungseinheit 15 verbunden, welche eine Prozessregelung der elektrochemischen Bearbeitung ausführt. Dabei gibt der Durchflussmesser 12 kontinuierlich Werte für eine Durchflussmenge an die Regelungseinheit 15. Ebenfalls gibt die Druckmesseinrichtung 13 kontinuierlich Druckmesswerte an die Regelungseinheit 15. Die Regelungseinheit 15 regelt dann basierend auf den kontinuierlich erhaltenen Durchfluss- und Druckwerten den Prozess. Hierbei kann die Regelungseinheit 15, basierend auf Änderungen bei den erhaltenen Werten, den Prozess regeln. Die kontinuierliche Messung des Durchflusses ermöglicht dabei eine genaue Überwachung der gefertigten Kontur. Somit kann der elektrochemische Bearbeitungsprozess nach der Zielgröße der Geometrie geregelt werden, wodurch eine Reduzierung von Ausschussteilen erreicht wird. Ferner kann erfindungsgemäß sofort nach einem Erreichen einer gewünschten Geometrie der Prozess beendet werden, so dass im Vergleich mit dem Stand der Technik auch reduzierte Bearbeitungszeiten erhalten werden.

Nachfolgend wird unter Bezugnahme auf Figur 2 eine Vorrichtung 1 gemäß einem zweiten Ausführungsbeispiel der Erfindung im Detail beschrieben, wobei gleiche bzw. funktional gleiche Teile mit den gleichen Bezugszeichen wie im ersten Ausführungsbeispiel bezeichnet sind.

Im Unterschied zur Vorrichtung des ersten Ausführungsbeispiels weist die Vorrichtung 1 des zweiten Ausführungsbeispiels einen ersten Leitungsabschnitt 8 auf, welcher sich verzweigt. Wie aus Figur 2 ersichtlich ist, verzweigt sich der erste Leitungsabschnitt 8 in einen ersten Verzweigungsabschnitt 8a und einen zweiten Verzweigungsabschnitt 8b. Dabei ist in dem ersten Verzweigungsabschnitt 8a ein erster Durchflussmesser 12 und ein erster Druckmesser 13 angeordnet. In dem zweiten Verzweigungsabschnitt 8b ist ein zweiter Durchflussmesser 16 und ein zweiter Druckmesser 17 angeordnet. Die Verzweigung erfolgt dabei in Strömungsrichtung nach dem Speicher 14. Die beiden Durchflussmesser 12, 16 und die beiden Druckmesser 13, 17 sind wiederum mit der Regeleinheit 15 verbunden, welche basierend auf den ihr zugeführten Durchfluss- bzw. Druckwerten den elektrochemischen Bearbeitungsprozess regelt. Weiterhin ist nur eine Rückleitung 9 vorgesehen, welche von der Aufnahmeeinrichtung zurück zum Tank 6 führt. Ansonsten entspricht dieses Ausführungsbeispiel dem vorhergehenden Ausführungsbeispiel, so dass auf die dort gegebene Beschreibung verwiesen werden kann.

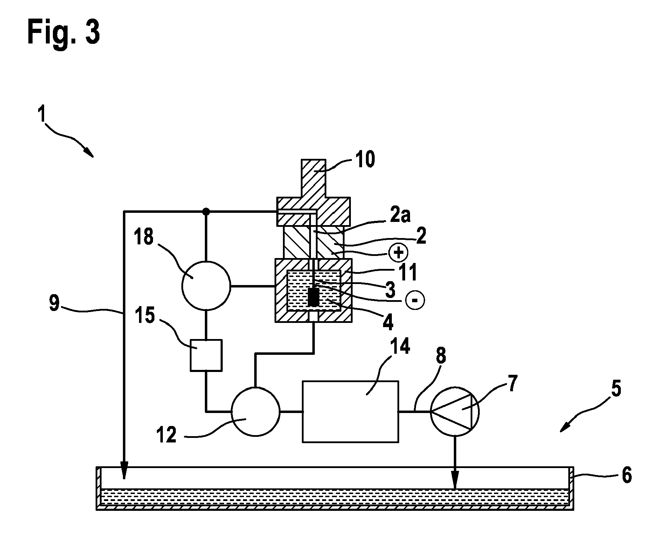

Nachfolgend wird unter Bezugnahme auf Figur 3 eine Vorrichtung 1 gemäß einem dritten Ausführungsbeispiel der Erfindung im Detail beschrieben, wobei gleiche bzw. funktional gleiche Teile mit den gleichen Bezugszeichen wie im ersten Ausführungsbeispiel bezeichnet sind.

Das dritte Ausführungsbeispiel entspricht im Wesentlichen dem ersten Ausführungsbeispiel, wobei im Unterschied dazu beim dritten Ausführungsbeispiel ein Druckmesser 18 vorgesehen ist, welcher zwei Druckwerte ermittelt. Ein erster Druckwert wird dabei nahe der Elektrode 3 am zweiten Teil 11 der Aufnahmeeinrichtung aufgenommen und ein zweiter Druckwert wird aus der Rückleitung 9 entnommen. Die Regelungseinheit 15 berechnet dabei einen Differenzwert aus den beiden durch den Druckmesser 18 aufgenommenen Druckwerten und überwacht eine Änderung der Differenzwerte. Sobald eine Änderung der Differenzwerte und/oder eine Änderung einer Durchflussmenge, welche durch den Durchflussmesser 12 aufgenommen wird, vorliegt, wird eine entsprechende Prozesssteuerung, in der Regel eine Beendigung des Prozesses durch die Regelungseinheit 15 ausgeführt, da beispielsweise eine entsprechende Entgratung an einer Bohrung 2a im Werkstück 2 fertiggestellt ist. Ansonsten entspricht dieses Ausführungsbeispiel den vorhergehenden Ausführungsbeispielen, so dass auf die dort gegebene Beschreibung verwiesen werden kann.

Die erfindungsgemäße Vorrichtung 1 wird dabei insbesondere bei der Bearbeitung von Präzisionsteilen, wie beispielsweise Bauteilen für die Kraftstoffeinspritzung, verwendet. Hierbei werden insbesondere Entgratungen, Anbringen spezieller Verrundungsgeometrien an Bohrungen, Herstellung von Drosselbohrungen oder Einbringen von Druckkammern mittels der erfindungsgemäßen Vorrichtung und dem erfindungsgemäßen Verfahren ausgeführt.

## Patentansprüche

1. Vorrichtung zur elektrochemischen Bearbeitung von Werkstücken (2), umfassend
- eine Aufnahmeeinrichtung (10, 11), um das zu bearbeitende Werkstück (2) zu halten,
- eine Elektrode (3), um das Werkstück (2) zu bearbeiten,
- eine Elektrolytversorgungsvorrichtung, um eine Versorgung mit einer Elektrolytlösung (4) sicherzustellen,
- eine Regelungseinheit (15) zur Regelung der elektrochemischen Bearbeitung und
- eine Durchflussmessvorrichtung (12, 16), welche mit der Regelungseinheit (15) verbunden ist und welche kontinuierlich eine Durchflussmenge der Elektrolytlösung erfasst,
- wobei die Regelungseinheit (15) basierend auf den Werten der erfassten Durchflussmenge eine Prozessregelung ausführt.

2. Vorrichtung nach Anspruch 1, **dadurch gekennzeichnet, dass** die Regelungseinheit (15) ausgelegt ist, bei einer Änderung der Durchflussmenge die Bearbeitung des Werkstücks (2) zu beenden.

3. Vorrichtung nach einem der vorhergehenden Ansprüche, **dadurch gekennzeichnet, dass** die Durchflussmessvorrichtung einen Durchflussmesser (12) umfasst, welcher in einem ersten Leitungsabschnitt (8) der Elektrolytversorgungsvorrichtung (5) in Strömungsrichtung vor dem Werkstück (2) angeordnet ist.

4. Vorrichtung nach einem der vorhergehenden Ansprüche, **dadurch gekennzeichnet, dass** die Durchflussmessvorrichtung einen Durchflussmesser (12) umfasst, welcher in einem Leitungsabschnitt der Elektrolytversorgungsvorrichtung (5) in Strömungsrichtung nach dem Werkstück (2) angeordnet ist.

5. Vorrichtung nach einem der vorhergehenden Ansprüche, ferner umfassend eine Druckerfassungsvorrichtung (13, 17), welche einen Druck der Elektrolytlösung (4) insbesondere nahe am Werkstück (2) erfasst.

6. Vorrichtung nach einem der vorherigen Ansprüche, **dadurch gekennzeichnet, dass** die Druckerfassungsvorrichtung (18) einen ersten Druck an einer Position in Strömungsrichtung vor oder nahe am Werkstück (2) erfasst und einen zweiten Druck an einer Position in Strömungsrichtung nach dem Werkstück (2) umfasst und die Regeleinheit (15), basierend auf einer Differenz zwischen dem ersten und zweiten Druck und/oder basierend auf einer Änderung eines Differenzdrucks zwischen dem ersten und zweiten Druck eine Prozessregelung ausführt.

7. Vorrichtung nach einem der vorhergehenden Ansprüche, **dadurch gekennzeichnet, dass** die Elektrolytversorgungsvorrichtung (5) ein Dämpfungselement und/oder ein Druckregelventil und/oder einen Druckpuffer (14) umfasst, um einen Druck der Elektrolytlösung für die Bearbeitung des Werkstücks möglichst konstant zu halten.

8. Vorrichtung nach einem der vorhergehenden Ansprüche, **dadurch gekennzeichnet, dass** die Elektrode (3) während einer Bearbeitung des Werkstücks (2) ortsfest gehalten ist.

9. Verfahren zur elektrochemischen Bearbeitung von Werkstücken, **dadurch gekennzeichnet, dass** während einer Bearbeitung eines Werkstücks (2) kontinuierlich eine Durchflussmenge einer Elektrolytlösung (4) erfasst wird und die erfassten Werte für die Durchflussmenge für eine Prozessregelung mittels einer Regelungseinheit (15), insbesondere zur Bestimmung eines Endes des Prozesses, verwendet werden.

10. Verfahren nach Anspruch 9, **dadurch gekennzeichnet, dass** für die Prozessregelung absolute Werte für die Durchflussmenge und/oder eine Änderung einer Differenz zwischen zwei Werten für die Durchflussmenge verwendet werden.

11. Verfahren nach Anspruch 9 oder 10, **dadurch gekennzeichnet, dass** zur Prozessregelung ferner auch Druckwerte der Elektrolytlösung verwendet werden.
